# EUROPEAN PATENT APPLICATION

(11) **EP 4 411 532 A1**
(43) Date of publication of application: **07.08.2024**
(21) Application number: 22882463.7
(22) Date of filing: 01.09.2022
(51) Int. Cl.: G06F 8/30

(54) **COMPUTATIONAL LOGIC PROCESSING METHOD, ELECTRONIC DEVICE, AND READABLE STORAGE MEDIUM**

(30) Priority: 18.10.2021 CN 202111211756
(71) Applicant: Ebaotech Corporation, Shanghai 200433 (CN)
(72) Inventor: NI, Jian, Shanghai 200433 (CN); XIONG, Hui, Shanghai 200433 (CN); WANG, Yunteng, Shanghai 200433 (CN); LIU, Junsheng, Shanghai 200433 (CN); XING, Zhihui, Shanghai 200433 (CN); MO, Yuanwu, Shanghai 200433 (CN)
(74) Representative: Nederlandsch Octrooibureau
(86) International application number: PCT/CN2022/116538
(87) International publication number: WO 2023/065847

(57) **Abstract**

This application relates to the field of computer software, and discloses an apparatus, method and readable storage medium for computational logic processing. The method is applied to apparatus including a server side and a client side. In this method, the client side obtains and sends input data and configuration data to the server side. The server side parses the configuration data to generate static computational subgraphs, and then connects the input data and the static computational subgraphs to generate dynamic computational subgraphs. Finally, the dynamic computational subgraphs is executed to obtain computational results. Therefore, decoupling between the computational logics and the input data is implemented, reusing of the computational logics can be implemented, and development efficiency of software developers is improved. In addition, an error of the computational logics in implementation is irrelevant with the application module because of computational logics' independent implementation, deployment, management, and operation, improving maintainability of the application module.

## Description

### CROSS-REFERENCE TO RELATED APPLICATIONS

The present application is related to, and claims priority to: Chinese Patent Application No. 202111211756.7, submitted to China National Intellectual Property Administration entitled "COMPUTATIONAL LOGIC PROCESSING METHOD, ELECTRONIC DEVICE, AND READABLE STORAGE MEDIUM", filed on October 18, 2021, the entire contents of both of which are incorporated herein by reference.

### TECHNICAL FIELD

The present application relates to financial software field, and in particular, to an apparatus, method and readable storage medium for computational logic processing.

### BACKGROUND

Currently, whether in a field of online transaction processing or in a field of big data processing, a computational logic such as a computational process, a computational rule, and a computational formula, used in data processing is usually implemented by means of coding of a programming language. However, the way that the computational logic is implemented by means of coding has a relatively high requirement for computational logic developers. In addition, the implementation of same computational logic in different data processing applications is diverse, which is not conducive to maintenance of data processing applications.

In the insurance business field, some combinatory computational logics are relatively complex, because there are multiple computational logics in one combinatory computational logic, such as decision tree computation, four arithmetic operations, aggregation computation, and computational conditions and rules. What's more, computational steps of a combinatory computational logic may also change according to a rule. Even a new computational logic may be created in a computational process of the combinatory computational logic such as a process of creating a new insurance product. Therefore, the difficulty in coding these complicate combinatory computational logics is great and the working efficiency is low.

### SUMMARY

Embodiments of this application disclose an apparatus, method, and readable storage medium for computational logic processing, so as to solve a problem in the prior art that computational logics are tightly coupled to application modules, which needs to be implemented by means of coding.

In the first aspect, described may include a computational logic processing method, applied to apparatus including a server side and a client side, comprising: obtaining and sending, by the client side, input data and configuration data, to the server side, wherein the input data is used to describe data values required for executing computational logics, and the configuration data is used to describe configuration information of the computational logics and association information between the computational logics in a service processing process; parsing, by the server side, the configuration data to generate static computational subgraphs, wherein the computational logics are nodes, and data flow directions between the computational logics are sides in the static computational subgraphs; connecting, by the server side, the input data to the static computational subgraphs to generate dynamic computational subgraphs; executing, by the server side, the dynamic computational subgraphs to obtain computational results.

In one or more possible implementations, parsing, by the server side, the configuration data to generate static computational subgraphs comprises: serializing, by the server side, the computational logics with hierarchical structures; generating, by the server side, the static computational subgraphs according to serialization results.

In one or more possible implementations, generating, by the server side, the static computational subgraphs according to serialization results comprises: generating, by the server side, the static computational subgraphs according to serialization results by flow-based programming.

In one or more possible implementations, connecting, by the server side, the input data to the static computational subgraphs to generate dynamic computational subgraphs comprises: determining, by the server side, corresponding data values in the input data according to data parameters of the computational logics in the static computational subgraphs, and connecting the data values to the data parameters.

In one or more possible implementations, executing, by the server side, the dynamic computational subgraphs to obtain computational results comprises: executing, by the server side, the dynamic computational subgraphs to obtain preliminary computational results; formatting the preliminary computational results according to formatting configuration information in the configuration data to obtain formatted data, which is the computational results.

In one or more possible implementations, the computational logics comprise at least one of the following: a computational expression, an extension function, a variable, a filter, and a decision tree.

In one or more possible implementations, the input data is in a JSON format and the configuration data is described by a combination of YAML and DSL.

In the second aspect, disclosed may include an apparatus, comprising: a memory, configured to store instructions executed by one or more processors of the apparatus; and, a processor, one of the one or more processors of the apparatus, configured to execute the computational logic processing method mentioned in the first aspect above.

In the third aspect, disclosed may include a readable storage medium storing instructions, wherein when the instructions are executed by one or more processors of an apparatus, the instructions cause the apparatus to execute the computational logic processing method mentioned in the first aspect above.

In the fourth aspect, disclosed may include a computer program product including computer programs/instructions, wherein the computer programs/instructions are executed by one or more processors to implement the computational logic processing method mentioned in the first aspect above.

The computational logic processing method disclosed in this application is applied to apparatus including a server side and a client side. In this method, the client side obtains and sends input data and configuration data to the server side. The server side parses the configuration data to generate static computational subgraphs, and then connects the input data and the static computational subgraphs to generate dynamic computational subgraphs. Finally, the dynamic computational subgraphs is executed to obtain computational results. Therefore, decoupling between the computational logics and the input data is implemented, reusing of the computational logics can be implemented, and development efficiency of software developers is improved. In addition, an error of the computational logics in implementation is irrelevant with the application module because of computational logics' independent implementation, deployment, management, and operation, improving maintainability of the application module.

### BRIEF DESCRIPTION OF THE DRAWINGS

FIG. 1 shows a schematic scenario diagram of a computational logic processing according to some embodiments of the present application.
FIG. 2 shows a schematic diagram of examples on some computational logics according to some embodiments of the present application.
FIG. 3 shows a hardware structural diagram of an apparatus according to some embodiments of the present application.
FIG. 4 shows a schematic flow diagram of a computational logic processing method according to some embodiments of the present application.
FIG. 5 shows a schematic diagram of a format of input data according to some embodiments of the present application.
FIG. 6 shows a schematic diagram of configuration data for computing insurance charges according to some embodiments of the present application.

### DETAILED DESCRIPTION

Illustrative embodiments of the present application include, but are not limited to, an apparatus, method, and readable storage medium for computational logic processing.

As used herein, the term "module" may refer to or include an application specific integrated circuit (ASIC), an electronic circuit, a processor (shared, dedicated, or group) that executes one or more software or firmware programs, and/or a memory, a combinatory logic circuit, and/or other suitable hardware components that provide the described functions, or may be part of these hardware components.

In embodiments of this application, the processor may be a microprocessor, a digital signal processor, a microcontroller, or any combination thereof. According to another aspect, the processor may be a single-core processor, a multi-core processor, and/or any combination thereof.

The computational logic processing method in this application is applicable to a scenario in which a computational logic flow including multiple computational logics is computed.

The following content describes embodiments of this application in detail with reference to the drawings.

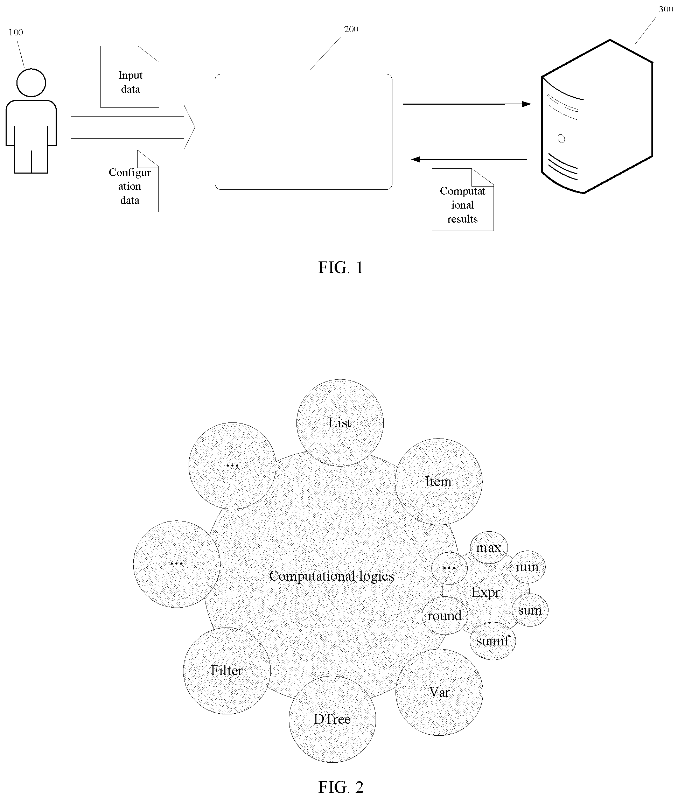

FIG. 1 shows a scenario in which a computational logic flow including multiple computational logics is computed according to some embodiments of the present application. As shown in FIG. 1, a user 100 provides input data and configuration data to an application module 200. The application module 200 receives the input data and the configuration data, and then sends the input data and the configuration data to a computational engine 300. The computational engine 300 returns computational results to the application module 200. The application module 200 performs subsequent processing according to the computational results or displays the computational results to the user 100.

A computational logic (CL) refers to a computation-related element which is required for implementing a service function in a service application, and may include but is not limited to a computational process, a computational rule, a computational formula, etc. Specifically, some basic computational logics may include computational expressions, extension functions, variables, filters, decision trees, etc. The computational logic generally includes data parameters, and the computational logic performs computation according to values of the data parameters to obtain specific computational logic results.

The user 100 may be a person familiar with a software project service, or may be a professional software developer. The user 100 may provide the input data and the configuration data into the application module 200. The input data is a kind of specific data value, assigned to data parameters in the computational logic. The configuration data is used to configure a complex service processing that includes multiple computational logics, and includes related configuration information and data parameters of multiple computational logics. The configuration data does not include specific data values used to compute the computational logics. Separation of the configuration data and the input data may achieve computational decoupling between the computational logic and the input data, thereby achieving reuse of a service processing, avoiding repeatedly developing same service processing. By doing so, the working efficiency of software developers will be improved.

The application module 200 is configured to obtain the input data and the configuration data provided by the user 100. Obtaining manners may include but are not limited to: obtaining in an interface manner, obtaining in a file form, and obtaining according to user selection. For example, the application module 200 may provide an input data interface and a configuration data interface for the user 100. The user 100 performs related data input on the input data interface and on the configuration data interface. After the user 100 completes input, the input data interface and the configuration data interface submit the input data to the application module 200. The user 100 may also store the input data and the configuration data in a data file in advance, and submit the data file to the application module 200. The application module 200 obtains the input data and the configuration data by parsing the data file. The application module 200 may provide multiple preset configuration data templates for the user 100, and use the configuration data template selected by the user 100 or the modified configuration data template as the configuration data to be used.

After acquiring the input data and the configuration data, the application module 200 sends the input data and the configuration data to the computational engine 300 for computation. The computational engine 300 performs abstract processing on the multiple computational logics, and may put the input data into the computational logics defined in the configuration data to obtain computational results. The input data processed by the computational engine 300 may include different data structures, which may include but are not limited to hierarchical structures and list structures.

FIG. 2 illustrates examples of computational logics that may be supported by the computational engine 300, including List, Item, Filter, DTree, Var (variable), Expr (expression), etc., where the Expr may further include computational logics on function such as max, min, sum, sumif, round. The user 100 may use one or more of these computational logics in the configuration data. In the case of using multiple computational logics, multiple computational logics may be organized into a form of a computational logic flow in the configuration data.

Finally, the computational engine 300 returns the computational results of the computational logics to the application module 200, and the application module 200 performs subsequent processing. The application module 200 may use the computational results as input data of subsequent processing, and may also directly display the computational results to the user.

In the method provided in this application, the configuration data including computational logics, and the input data are executed on the separate computational engine 300. That is to say, in this way, the computational logics originally distributed among multiple application modules 200 can be executed on the computational engine 300 now. Therefore, there is no need for software developers to repeatedly implement computational logics on each application module 200, thereby reducing workload of software developers and improving development efficiency of software application. In addition, implementation and computation of the computational logics are managed uniformly by the computational engine 300, which improves maintainability of software application. In a case in which there is an error in implementation of the computational logics, a modified correct implementation may be applied to multiple application modules 200 by means of modifying the error on the computational engine 300, facilitating maintenance of the application module 200.

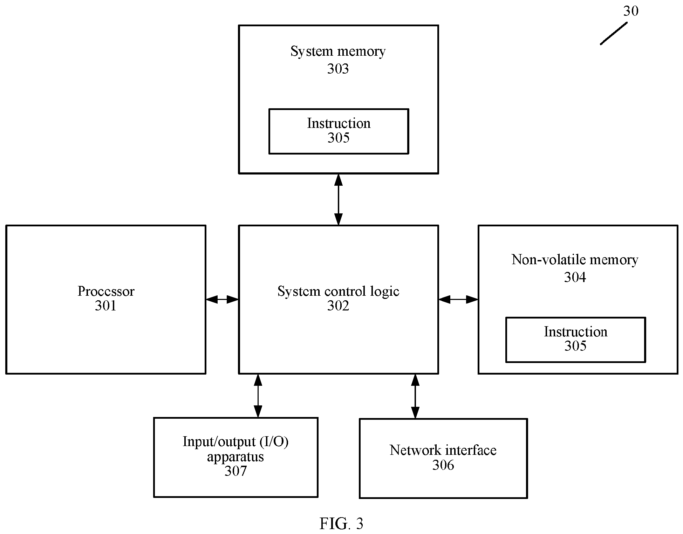

FIG. 3 shows a hardware structural diagram of an apparatus 30 configured to implement a computational logic processing method according to some embodiments of this application. In the embodiment shown in FIG. 3, the apparatus 30 may include one or more processors 301, a system control logic 302 coupled to at least one of the processors 301, a system memory 303 coupled to the system control logic 302, a non-volatile memory (NVM) 304 coupled to the system control logic 302, and a network interface 306 coupled to the system control logic 302.

In some embodiments, the processors 301 may include one or more single-core or multi-core processors. In some embodiments, the processors 301 may include any combination of general-purpose processors and special-purpose processors (e.g., graphics processors, disclosure processors, baseband processors). In embodiments where the apparatus 30 employs an Evolved Node B (eNB) or a radio access network (RAN) controller, the processors 301 may be configured to perform various compliant embodiments. For example, the processors 301 may be used to execute method for computational logic processing.

In some embodiments, the system control logic 302 may include any suitable interface controller to provide any suitable interface to at least one suitable apparatus or component of the processors 301 that may communicate with the system control logic 302.

In some embodiments, the system control logic 302 may include one or more memory controllers to provide interfaces connecting the system memory 303. The system memory 303 may be used to load and store data and/or instructions. For example, the system memory 303 can load instructions for parsing the computational logics in some embodiments of this application, and can also save the input data and the configuration data.

In some embodiments, the system memory 303 of the apparatus 30 may include any suitable volatile memory, such as a suitable dynamic random access memory (DRAM).

The NVM 304 may include one or more tangible, non-transitory computer readable media for storing data and/or instructions. In some embodiments, the NVM 304 may include any suitable non-volatile memory, such as flash memory, and/or any suitable non-volatile storage apparatus, such as at least one of a hard disk drive (HDD), a compact disc (CD) drive, and a digital versatile disc (DVD) drive. In some embodiments, the NVM 304 may be used to store the input data and the configuration data acquired by the application module.

The NVM 304 may include a portion of storage resources on the device on which the apparatus 30 is installed, or it may be accessed by the apparatus, but it may not a part of the apparatus. For example, the NVM 304 may be accessed over the network via the network interface 306.

In particular, the system memory 303 and the NVM 304 may include a temporary copy and a permanent copy of instructions 305, respectively. The instructions 305 may include instructions that make the apparatus 30 implement the method shown in FIG. 3 when the instructions are executed by at least one of the processors 301. In some embodiments, the instructions 305, hardware, firmware, and/or software components thereof may additionally/alternatively be placed in the system control logic 302, the network interface 306, and/or the processors 301.

The network interface 306 may include a transceiver for providing a radio interface for the apparatus 30 to communicate with any other suitable apparatus (e.g., front-end module, antenna) via one or more networks. In some embodiments, the network interface 306 may be integrated with other components of the apparatus 30. For example, the network interface 306 may be integrated with at least one of the followings: the processors 301, the system memory 303, the NVM 304, and a firmware apparatus (not shown in FIG. 3). When the instructions are executed by at least one of the processors 301, the apparatus 30 can realize the method in embodiments. In this application, the network interface 306 can be used to receive the input data and the configuration data sent by the application module.

The network interface 306 may further include any suitable hardware and/or firmware to provide a multiple-input multiple-output radio interface. For example, the network interface 306 may be a network adapter, a wireless network adapter, a telephone modem, and/or a wireless modem.

In one embodiment, at least one of the processors 301 may be packaged together with logic of one or more controllers of the system control logic 302 to form a system in a package (SiP). In one embodiment, at least one of the processors 301 may be integrated on the same die with logic of one or more controllers of the system control logic 302 to form a system on chip (SoC).

The apparatus 30 may further include an input/output (I/O) apparatus 307. The I/O apparatus 307 may include a user interface to enable a user to interact with the apparatus 30. The peripheral component interface is designed so that peripheral components can also interact with the apparatus 30.

The structure shown in FIG. 3 does not constitute a specific limitation on the apparatus 30. In some other embodiments of this application, the apparatus 30 may include more or fewer components than those shown in the FIG. 3. The apparatus 30 may also combine some components, split some components, or have different component arrangements. The components shown may be implemented by hardware or software, or a combination of software and hardware.

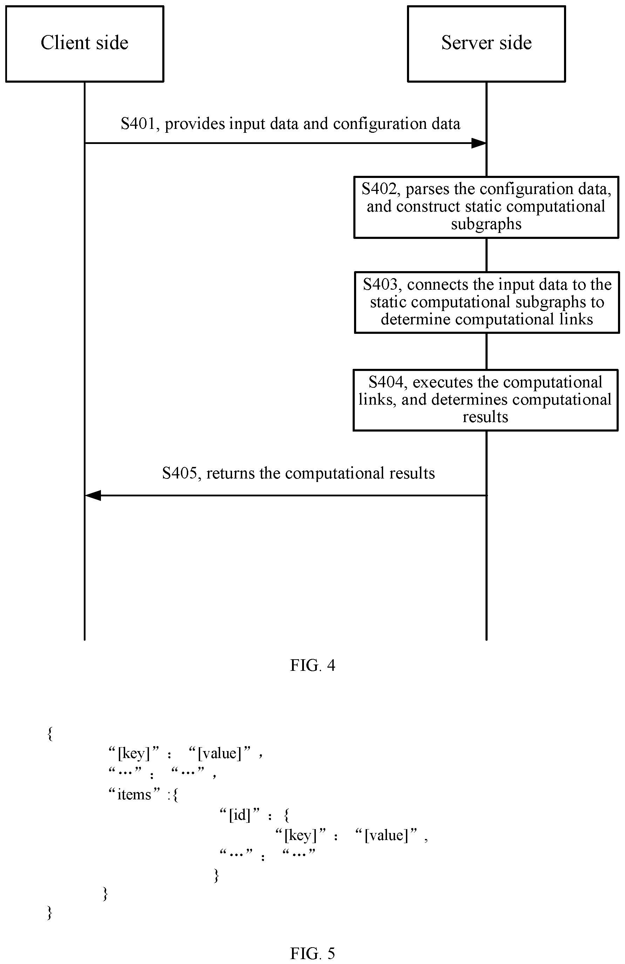

With reference to the foregoing structure shown in FIG. 3, the following describes in detail the technical solutions of this application according to FIG. 4 in a specific scenario. As shown in FIG. 3, technical solutions of a computational logic processing method in some embodiments of this application include:
S401: A client side provides input data and configuration data for a server side.

The client side is configured to acquire the input data and the configuration data that are used to execute computational logics, and the client side may be a module or a component in a software application. The server side is configured to, receive the input data and the configuration data sent by the client side and execute corresponding computational logics according to the input data and the configuration data, to obtain computational results. The hardware apparatus corresponding to the server side and the client side may be the apparatus 30.

In some embodiments of this application, the user 100 may provide both input data and configuration data for the client side. Or it may only provide the input data for the client side, with the server side generating the configuration data by itself. The client side may generate the configuration data in multiple manners. For example, the client side may directly generate the configuration data by using a pre-developed configuration data template, or may generate the configuration data according to modifying results after the user 100 modifies the configuration data template.

In addition, the client side may provide the user 100 with an input interface and a configuration interface, so that the user 100 can input related data. The input interface and the configuration interface may be graphical interfaces, and may also provide a graphical boot process for an input process of the related data, so as to guide the user 100 to input the input data and the configuration data, reducing possibility of making mistakes in the input process.

In some embodiments of this application, the input data may be in multiple formats, including but not limited to an XML format, a JSON format, etc. After receiving the input data provided by the user 100, the client side may convert the format of the input data into a uniform data format used by the client side. For example, if the format of the input data provided by the user 100 is the XML format, the client side may convert the XML format into the JSON format. The client side may also directly use the format of the input data. For example, if the input data's format provided by the user 100 is the JSON format, the client side may directly use the input data in the JSON format.

FIG. 5 shows a format of input data in some embodiments of this application. As shown in FIG. 5, [key] represents a name of a specific data parameter in the input data, and the name of the data parameter may be described by using any string. For example, the name of a data parameter is "username". A data parameter in the input data corresponds to a data parameter with the same name in the configuration data, and a data value corresponding to the data parameter in the input data is assigned to the data parameter with the same name in the configuration data during the operating process of computational logics. [Value] represents the data value corresponding to the data parameter, and the data value may be a string of any character or number.

Multiple data parameters and corresponding data values can be defined in the input data, which is shown in the form of "...": "..." in the FIG. 5. "Items" is a keyword in the input data and is used to describe data organized in a hierarchical manner in the input data. [id] in "items" represents a unique identifier of an item, which is used to determine the corresponding item. The unique identifier may be a string of any character or number. Meanings of the [key] and the [value] in the "items" are basically the same as those in the former paragraph. The difference is that they are used in different ranges. For example, the [key] and the [value] in the "items" are used only in "items", while the [key] and the [value] mentioned in former paragraph are used in the entire range of the input data.

The configuration data can also be represented in multiple forms, such as the XML format, the JSON format. To facilitate description of computational logics and corresponding computing diagrams, in some embodiments of this application, the configuration data is described in a combination form of YAML and a domain specified language (DSL). The YAML language is a data-centric configuration file language. In essence, the language provides a universal data serialization format, which is very convenient for people to read and write data. The YAML language supports three data structures: objects, arrays, and scalars. The objects are a set of key value pairs, the arrays are a group of values arranged in order, and the scalars are single and non-separable values. The basic syntax rules of the YAML language include the following. For example, case sensitivity is enabled; indentation is used to indicate level relationships; Tab key is limited during indentation; only space is allowed during indentation, and the space number is not important, as long as elements of the same level can be aligned on the left.

The DSL refers to a computer language that is focused on a service field, and can only be used in some specific service fields, such as a financial field or an insurance field. DSL enables experts in a service field to describe all service activities and service rules in the service field in a simple programming manner, so as to improve readability of software code and make software developers and experts communicate with each other better.

In this embodiment of this application, the configuration data is set with reference to manner of YAML and DSL, which provides a simple syntax feature for setting of the configuration data in the financial and insurance fields, so that a learning curve of the user 100 is reduced, and efficiency of developing the configuration data by the user 100 is improved.

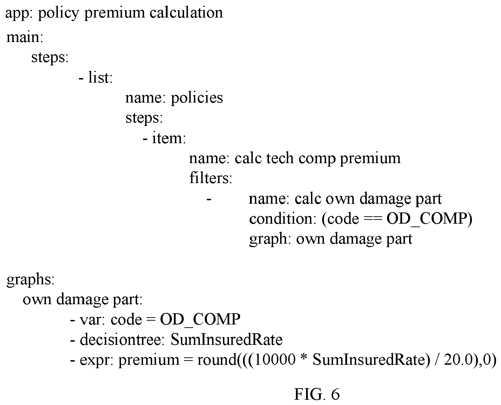

FIG. 6 shows the configuration data used to compute (or calculate) insurance charges in some embodiments of this application. As shown in FIG. 6, the "app" is used to describe name of the configuration data, which is "policy premium calculation". The name of the configuration data is generally used to support visualization of the computational process of computational logics. The keyword "main" is followed by the keyword "app" and is used to indicate beginning of the computational process of computational logics. The computational process of computational logics may include multiple computational steps, which are defined using a keyword "steps". There may be multiple computational logics in the computational steps, such as computational logic "list" in the FIG. 6. The computational logics has their corresponding names. In some embodiments of this application, the name of the computational logics may be explicitly provided, or may be implicitly provided. For example, the name of the computational logic "list" in FIG.6 is displayed by using "name: policies" explicitly, and the name of the computational logic "var" in the FIG. 6 is not directly provided, but is implicitly provided. Similarly, names of the computational logics may also be used to support visualization of computational process of the computational logics.

In some embodiments of this application, computational logics may further include sub-computational logics, and subsequent processing is executed on the output data of the computational logics by using the sub-computational logics. As shown in FIG. 6, the computational logic "list" includes a sub-computational logic "item", and the sub-computational logic "item" may process the output data of the computational logic "list". In addition, the computational logic "list" may include several number of sub-computational logic "item", and each "item" may be executed in parallel to improve execution efficiency. To specify "item" that participates in parallel computation, a condition filtering may be performed by using a keyword "filters", and "item" that meets the filtering condition may perform corresponding computation. The name of a filter in FIG. 6 is "calc own damage part", and the filtering condition is whether the value of the data parameter "code" under "item" is equal to a predefined value OD_COMP, where "code" is a data parameter defined in the input data. When the filtering condition is met, which means the value of "code" is equal to OD_COMP, a dynamic computational diagram named "own damage part" is executed.

The dynamic computational diagram is defined by a keyword "graphs". The dynamic computational diagram defines a variety of computational logics used to compute insurance charges, including "var", "decisiontree" and "expr". A computational logic "round" is also used in the "expr". According to FIG. 6, a process of computing insurance charges includes computing insurance premium rates and computing insurance charges. The computational logic "decisiontree" is used to compute the insurance premium rates, and the computational logic "expr" is used to compute the insurance charges. The value "SumInsuredRate" corresponding to the "decisiontree" is a reference name of data in external data source. For example, the external data source may be an Excel file. The Excel file defines multiple computational formulas and corresponding data for computing the insurance premium rates. Each computational formula and corresponding result data have their corresponding reference name for external access.

In some embodiments of this application, the configuration data may not only include computational configurations related to computational process of the computational logics, but also include specific configurations corresponding to specific computational logics. The specific configurations only correspond to some specific computational logics, and other computational logics don't have corresponding specific configurations. For example, for the computational logic "decisiontree", common configuration manners include configuring by using an Excel file. Content of the Excel file needs to include specific configurations required for constructing a decision tree, while the computational logic "expr" doesn't have corresponding specific configurations for constructing a decision tree.

S402: The server side parses the configuration data, and construct static computational subgraphs.

After receiving the configuration data sent by the client side, the server side parses the configuration data, and constructs static computing subgraphs according to parsing results.

In some embodiments of this application, the parsing process on the configuration data by the server side includes serializing computational logics with hierarchical structures in the configuration data, and then constructing the static computing subgraphs according to serialization results. Serialization herein refers to transforming computational logics with hierarchical structures into computational logics with sequence structures. For example, the computational logic "list" with a hierarchical structure may include multiple "step", with one step including the computational logic "item". After the server side parses the configuration data, the computational logic "list" and the "item" may be serialized into an ordered array (an actual computation sequence). The static computing subgraphs are constructed based on the array after serialization by flow-based programming (FBP). FBP is a data flow programming paradigm, which is one of software engineering methods based on components. FBP treats a software application as a group of processes, where different processes communicate with each other through connection. The processes access connection through ports, in a manner similar to communication over a computer network. FBP converts data by using different components, which are essentially encapsulated modules or functions, and data flows are transferred between components by inter-process communication systems. In FBP, a software application is represented as a digraph, where a process is used as a node of the digraph, and connection between processes is used as a side of the digraph.

In this application, the static computational subgraphs are digraphs that use computational logics as nodes and data flow directions between computational logics as sides. The static computing subgraphs are not the final computing link, because of lacking some information. For example, the input data corresponding to the "item" is needed to execute parallel computation on the computational logic "item", but the configuration data does not include the input data. For another example, to execute the "graph" by using a filter, whether the input data corresponding to the "graph" includes the data parameter "code", and whether the value of the "code" is equal to the preset value OD_COMP is needed, but the configuration data does not include the input data.

S403: The server side connects the input data to the static computational subgraphs to determine computational links.

After obtaining the static computational subgraphs, the server side connects the input data to the static computational subgraphs, so as to obtain dynamic computational subgraphs that include complete information, which are computing links. In this case, the process that the input data is connected to the static computational subgraphs means that matching data parameters that require data values in the static computational subgraphs to data values of the same data parameters in the input data. For example, if a data parameter in the static computational subgraphs needs a specific data value, data value specified by the name of the same data parameter in the input data is assigned to the data parameter in the static computational subgraphs.

The input of the correct data values is completed by the computational logics in the static computational subgraphs. For example, the computational logic "item" may create corresponding number of goroutine according to the number of the computational logic "item", and complete connection to static computational subgraphs corresponding to the "item". For another example, the computational logic "filter" may determine whether to transfer the data value to a next node in the static computational subgraphs or conduct connection to corresponding static computational subgraphs, by determining whether the data value of the data parameter in the input data meets the filtering condition.

Nodes in the dynamic computational subgraphs obtained by the server side includes input ports and output ports. One node receives output data of a previous node by an input port, and output computational results obtained after a computational logic of the node is completed to next node by an output ports, so as to implement data flow between different nodes.

S404: The server side executes the computational links, and determines computational results.

After the server side obtains the dynamic computational subgraphs, which are the computational links, because the dynamic computing subgraphs have complete information, and the computational logics has corresponding input data, the server side may sequentially execute the computational logic in each node according to node directions in the dynamic computational subgraphs. After all nodes in the dynamic computational subgraphs are executed, final computational results are obtained.

S405: The server side returns the computational results to the client side.

The server aide may directly return the computational results to the client side, and may also perform certain processing on the computational results and then return the processed computational results to the client side. In some embodiments of this application, the server side may format the computational results before returning the computational results to the client side. Specifically, the configuration data may include format configuration information of the computational results, and the server side may format the computational results according to the format configuration information in the configuration data. The formatting process may include, for example, removing intermediate data in the computational results, converting names of the data parameters in the computational results, etc.

In embodiments of this application, the client side provides both the input data and the configuration data to the server side. In a case in which data organization structures and a data parameter names of the input data, and specific configurations corresponding to computational logics in the configuration data, conform to corresponding constraints, computational process of computational logics on the server side is similar to a stateless application, which is very suitable for deployment in a serverless mode.

The embodiments disclosed herein may be implemented in hardware, software, firmware, or a combination of these implementations. Embodiments of the present application may be implemented as a computer program or program code executed on a programmable system including at least one processor, a storage system (including volatile and non-volatile memory and/or storage elements), at least one input apparatus, and at least one output apparatus.

The program code may be applied to input instructions to perform the functions described herein and to generate output information. The output information may be applied to one or more output apparatus in a known manner. For purposes of this application, a processing system includes any system with a processor such as, a digital signal processor (DSP), a microcontroller, an application specific integrated circuit (ASIC), or a microprocessor.

The program code may be implemented in a high-level programming language or an object-oriented programming language to communicate with the processing system. The program code may also be implemented in assembly language or machine language, if necessary. Indeed, the mechanisms described herein are not limited in scope to any particular programming language. In either case, the language may be a compilation language or an interpretation language.

In some cases, the disclosed embodiments may be implemented in hardware, firmware, software, or any combination thereof. The disclosed embodiments may also be implemented as instructions carried by or stored on one or more temporary or non-temporary machine readable (e.g., computer readable) storage media, which may be read and executed by one or more processors. For example, the instructions may be distributed through a network or through other computer readable media. Thus, a machine readable medium may include any mechanism for storing or transmitting information in a readable form for a machine (e.g., a computer). The mechanism includes, but is not limited to, a floppy disk, an optical disk, a compact disc read-only memory (CD-ROMs), a magneto-optical disk, a read-only memory (ROM), a random access memory (RAM), an erasable programmable read-only memory (EPROM), an electrically erasable programmable read-only memory (EEPROM), a magnetic or optical card, a flash memory, or a tangible machine readable memory for transmitting information by signals in electrical, optical, acoustic, or other forms (e.g., a carrier wave, an infrared signal, a digital signal) using the Internet. Therefore, a machine readable medium includes any type of machine readable medium suitable for storing or transmitting electronic instructions or information in a form that can be read by a machine (e.g., a computer).

In the drawings, some structural or methodical features may be shown in a particular arrangement and/or sequence. However, it may be understood that such a particular arrangement and/or ordering may not be required. In some embodiments, these features may be arranged in a manner and/or sequence different from that shown in the drawings. In addition, the inclusion of structural or methodical features in a particular figure is not meant to imply that such features are required in all embodiments. And in some embodiments, such features may not be included or may be combined with other features.

Each unit/module mentioned in each apparatus embodiment of the present application is a logical unit/module. Physically, a logical unit/module may be a physical unit/module, may be a part of a physical unit/module, or may be implemented in a combination of a plurality of physical units/modules. The physical implementation of these logical units/modules is not the most important. The combination of functions implemented by these logical units/modules is the key to solving the technical problems proposed in the present application. Furthermore, in order to highlight the inventive part of the present application, the above-mentioned apparatus embodiments of the present application do not introduce units/modules which are not closely related to solving the technical problems set forth in the present application, which does not indicate that the above-mentioned apparatus embodiments do not have other units/modules.

In the embodiments and specification of this application, terms indicating relation such as first and second are used solely to distinguish one entity or operation from another entity or operation, and do not necessarily require or imply any such actual relationship or order between such entities or operations. Moreover, the terms "comprise", "comprising" or any other variation thereof, are intended to cover a non-exclusive inclusion, such that a process, method, article, or apparatus that comprises a list of elements includes not only the list of elements, but also other elements not expressly listed, or also includes elements inherent to such process, method, article, or apparatus. Without further limitation, an element defined by the statement "comprises one" does not rule out there are additional identical elements in the process, method, article, or apparatus that includes the element.

Although the present application has been illustrated and described with reference to certain preferred embodiments thereof, it should be understood by those of ordinary skill in the art that various changes may be made in form and detail without departing from the spirit and scope of the present application.

## Claims

1. A computational logic processing method, applied to apparatus including a server side and a client side, comprising:
obtaining and sending, by the client side, input data and configuration data, to the server side, wherein the input data is used to describe data values required for executing computational logics, and the configuration data is used to describe configuration information of the computational logics and association information between the computational logics in a service processing process;
parsing, by the server side, the configuration data to generate static computational subgraphs, wherein the computational logics are nodes, and data flow directions between the computational logics are sides in the static computational subgraphs;
connecting, by the server side, the input data to the static computational subgraphs, to generate dynamic computational subgraphs;
executing, by the server side, the dynamic computational subgraphs to obtain computational results.

2. The method of claim 1, wherein parsing, by the server side, the configuration data to generate static computational subgraphs comprises:
serializing, by the server side, the computational logics with hierarchical structures;
generating, by the server side, the static computational subgraphs according to serialization results.

3. The method of claim 2, wherein generating, by the server side, the static computational subgraphs according to serialization results comprises:
generating, by the server side, the static computational subgraphs according to the serialization results by flow-based programming.

4. The method of claim 1, wherein connecting, by the server side, the input data to the static computational subgraphs to generate dynamic computational subgraphs comprises:
determining, by the server side, corresponding data values in the input data according to data parameters of the computational logics in the static computational subgraphs, and connecting the data values to the data parameters.

5. The method of claim 1, wherein executing, by the server side, the dynamic computational subgraphs to obtain computational results comprises:
executing, by the server side, the dynamic computational subgraphs to obtain preliminary computational results;
formatting the preliminary computational results according to formatting configuration information in the configuration data to obtain formatted data, which is the computational results.

6. The method of claim 1, wherein the computational logics comprise at least one of the following: a computational expression, an extension function, a variable, a filter, and a decision tree.

7. The method of claim 1, wherein the input data is in a JSON format and the configuration data is described by a combination of YAML and DSL.

8. An apparatus, comprising:
a memory, configured to store instructions executed by one or more processors of the apparatus; and,
a processor, one of the one or more processors of the apparatus, configured to execute the computational logic processing method in any one of claims 1 to 7.

9. A readable storage medium storing instructions, wherein when the instructions are executed by one or more processors of an apparatus, the instructions cause the apparatus to execute the computational logic processing method in any one of claims 1 to 7.

10. A computer program product including computer programs/instructions, wherein the computer programs/instructions are executed by one or more processors to implement the computational logic processing method in any one of claims 1 to 7.
